# EUROPEAN PATENT APPLICATION

(11) **EP 3 355 185 A1**
(43) Date of publication of application: **01.08.2018**
(21) Application number: 17163137.7
(22) Date of filing: 27.03.2017
(51) Int. Cl.: G06F 9/445, H04L 29/08

(54) **METHOD AND SYSTEM FOR DEPLOYING AN APPLICATION PACKAGE IN EACH STAGE OF APLICATION LIFE CYCLE**

(30) Priority: 30.01.2017 IN 201741003404
(71) Applicant: Wipro Limited, 560 035 Karnataka (IN)
(72) Inventor: KASTHURI, Magesh, 631501 Tamilnadu, (IN)
(74) Representative: Finnegan Europe LLP

(57) **Abstract**

The present disclosure discloses a method and a system for deploying an application in each stage of an application lifecycle. The method comprises receiving, by an application deployment system, an application, for deploying in each stage of one or more stages of an application life cycle, compiling instruction data of the application to generate an instruction package, where the instruction data is compiled once, compiling configuration data of the application, to generate a configuration package, where the configuration data is compiled at each stage of the one or more stages of the application life cycle and assembling the configuration package corresponding to each stage of the one or more stages of the application life cycle and the instruction package for generating a corresponding application package, where the corresponding application package is deployed in a respective stage of the one or more stages of the application life cycle.

## Description

### TECHNICAL FIELD

The present disclosure relates to application deployment process. More specifically, but not exclusively, the present disclosure relates to a method and a system for deploying an application package in each stage of an application lifecycle.

### BACKGROUND

Application deployment is release of the application subsequent to complete development of the application. The application is deployed as an application package. The application package is deployed at various stages of an application life cycle, namely, development stage, System Integration Testing (SIT) stage, User Acceptance Testing (UAT) stage and production stage. In traditional systems, during deployment of the application package at each stage of the application lifecycle, entire application data is compiled at each stage. However, in many scenarios, instruction data of the application data remains unchanged and configuration data of the application data is changed according to the stage at which the application package is deployed. The repeated compilation of the instruction data during deployment at every stage is time consuming. Also, such deployment process consumes additional computing resources, thus increasing cost associated with the additional computing resources.

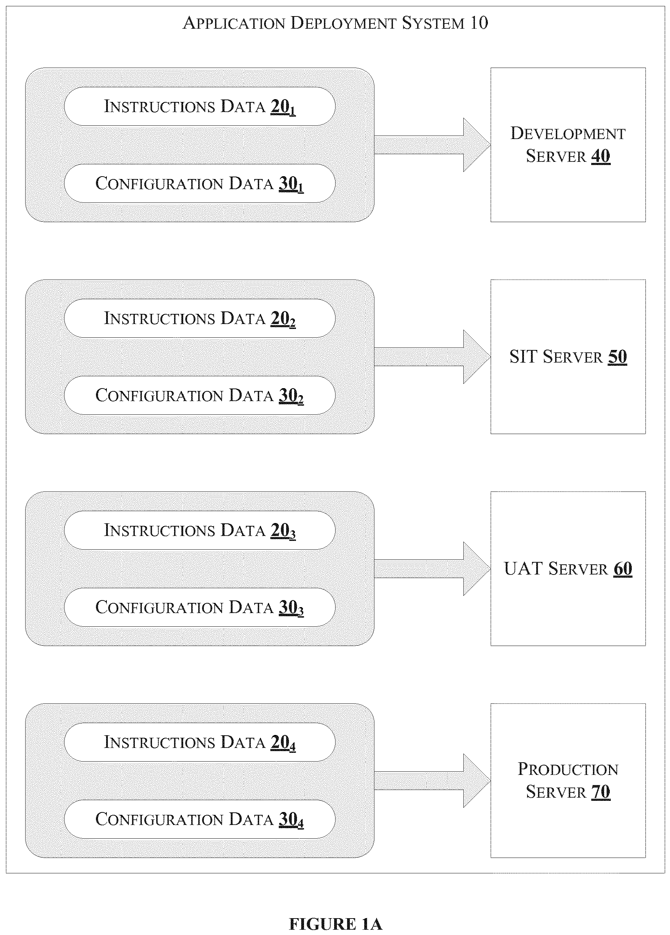

**Figure 1A** shows a conventional application deployment system 10. The application deployment system 10 comprises instruction data 20₁, instruction data 20₂, instruction data 20₃ and instruction data 20₄, configuration data 30₁, configuration data 30₂, configuration data 30₃ and configuration data 30₄, a development server 40, an SIT server 50, a UAT server 60, and a deployment server 70. The development server 40 compiles the instruction data 20₁ and the configuration data 30₁ to generate an application package corresponding to the development stage. Likewise, the SIT server 50, the UAT server 60, and the deployment server 70 compile the instruction data 20₂ and the configuration data 30₂, the instruction data 20₃ and the configuration data 30₃, the instruction data 20₄ and the configuration data 30₄ respectively to generate application packages corresponding to the stage of application deployment.

During deployment of the application package in conventional systems, debugging is a tedious process as the instruction data and configuration data are compiled at every stage. Specifically, analysis of error and identifying source of an error is a challenging task. Further, the conventional systems do not provide a solution to reduce complexity of cause analysis during debugging. As identifying errors is a tedious process, determining cause of such errors is more complex. Hence, debugging utilizes more time thereby reducing efficiency of the system.

The information disclosed in this background of the disclosure section is only for enhancement of understanding of the general background of the invention and should not be taken as an acknowledgement or any form of suggestion that this information forms the prior art already known to a person skilled in the art.

### SUMMARY

In an embodiment, the present disclosure relates to a method of deploying an application package, in each stage of an application life cycle. The method comprises receiving, by an application deployment system, an application, for deploying in each stage of an application life cycle, compiling instructions data of the application to generate an instruction package, where the instruction data is compiled once, at a first stage of the application life cycle during application deployment. The method further comprises compiling configuration data of the application, to generate a configuration package, where the configuration data is compiled at each stage of the application life cycle during application deployment and assembling the configuration package corresponding to each stage of the application life cycle and the instruction package for generating a corresponding application package, where the corresponding application package is deployed in a respective stage of the application life cycle.

In an embodiment, the present disclosure relates to an application deployment system. The application deployment system comprises a processor and a memory communicatively coupled to the processor. The processor is configured to receive an application for deploying in each stage of an application life cycle, compile instructions data of the application to generate an instruction package, where the instruction data is compiled once, at a first stage of the application life cycle during application deployment, compile configuration data of the application to generate a configuration package, where the configuration data is compiled at each stage of the application life cycle during application deployment and assemble the configuration package corresponding to each stage of the application life cycle and the instruction package for generating a corresponding application package, where the corresponding application package is deployed in a respective stage of the application life cycle.

In an embodiment, the present disclosure discloses a non-transitory computer readable medium including instructions stored thereon that when processed by at least one processor cause a device to perform operations comprising, receiving an application, for deploying in each stage of an application life cycle, compiling instruction data of the application to generate an instruction package, wherein the instruction data is compiled once, at a first stage of the application life cycle during application deployment, compiling configuration data of the application, to generate a configuration package, wherein the configuration data is compiled at each stage of the application life cycle during application deployment and assembling the configuration package corresponding to each stage of the application life cycle and the instruction package for generating a corresponding application package, wherein the corresponding application package is deployed in a respective stage of the application life cycle.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The novel features and characteristic of the disclosure are set forth in the appended claims. The disclosure itself, however, as well as a preferred mode of use, further objectives and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
**Figure 1A** shows a block diagram of a conventional application deployment system;
**Figure 1B** illustrates an application deployment system for deploying an application package in each stage of an application life cycle in accordance with some embodiments of the present disclosure;
**Figure 2** shows internal architecture of an application deployment system for deploying an application package in each stage of an application life cycle in accordance with some embodiments of the present disclosure;
**Figure 3** shows an exemplary flow chart illustrating method steps for deploying an application package in each stage of an application life cycle in accordance with some embodiments of the present disclosure; and
**Figure 4** illustrates a general-purpose computer system for deploying an application package in each stage of an application life cycle in accordance with some embodiments of the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

Embodiments of the present disclosure relate to a method and a system for deploying an application package in each stage of an application life cycle. The system receives an application for deploying in each stage of the application life cycle. The application life cycle comprises four stages, namely a development stage, a Standard Integration Test (SIT) stage, a User Acceptance Test (UAT) stage, and a production stage. The application comprises instructions data and configuration data. The system compiles the instruction data during application deployment in the development stage and compiles the configuration data during application deployment in the development stage, SIT stage, UAT stage and production stage. While deploying the application at a particular stage among the four stages, corresponding compiled configuration data and the instruction data compiled at the development stage are assembled to form an application package for deploying at the particular stage. The application package is deployed in the respective stages.

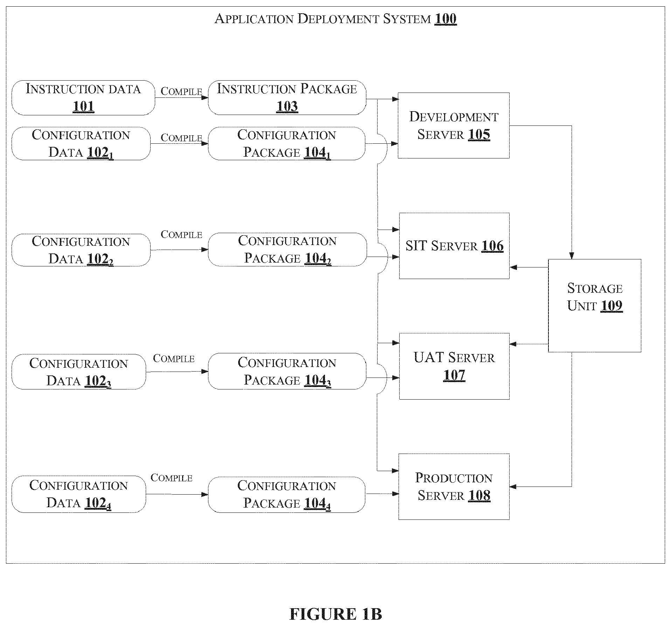

**Figure 1B** discloses an application deployment system 100 for deploying an application package in each stage of the application lifecycle. The application deployment system 100 comprises instruction data 101, configuration data 102₁, configuration data 102₂, configuration data 102₃, configuration data 102₄, an instruction package 103, a configuration package 104₁, a configuration package 104₂, a configuration package 104₃, a configuration package 104₄, a development server 105, an SIT server 106, a UAT server 107, a production server 108, and a storage unit 109. In one embodiment, the instruction data 101 is considered to be same during each stage of application deployment. In one embodiment, the configuration data 102₁ corresponds to configuration data of the application during application deployment in the development server 105. In an embodiment, the configuration data 102₂ corresponds to configuration data of the application during application deployment in the SIT server 106. In one embodiment, the configuration data 102₃ corresponds to configuration data of the application during application deployment in the UAT server 107. In one embodiment, the configuration data 102₄ corresponds to configuration data of the application during application deployment in the production server 108. In some embodiments, the configuration data 102₁, the configuration data 102₂, the configuration data 102₃ and the configuration data 102₄ may be represented as configuration data 102 of respective stages throughout this disclosure. Likewise, the configuration package 104₁, the configuration package 104₂, the configuration package 104₃ and the configuration package 104₄ may be represented as configuration package 104 of respective stages throughout this disclosure. The application is deployed in four stages. The application is deployed first on the development server 105. Subsequently, the application is deployed on the SIT server 106. Then, the application is deployed on the UAT server 107, lastly, the application is deployed on the production server 108.

The development server 105 is the first stage for deploying the application. The development server 105 compiles the instruction data 101 to generate the instruction package 103. Further, the deployment server 105 transmits the instruction package 103 to the storage unit 109 for storing the instruction package. Also, the development server 105 compiles the configuration data 102₁ to generate the configuration package 104₁. Further, the development server 105 assembles the instruction package 103 and the configuration package 104₁ to generate an application package for deploying on the development server 105.

The SIT server 106 is the second stage for deploying the application. Here, the SIT server 106 does not compile the instruction data 101. Instead, the SIT server 106 fetches the instruction package 103 from the storage unit 109. Further, the SIT server 106 compiles the configuration data 102₂ and generates the configuration package 104₂. Then, the SIT server 106 assembles the instruction package 103 and the configuration package 104₂ to generate an application package for deploying on the SIT server 106.

The UAT server 107 is the third stage for deploying the application. Similar to SIT server 106, the UAT server 107 fetches the instruction package 103 from the storage unit 109. Further, the UAT server 107 compiles the configuration data 102₃ and generates the configuration package 104₃. Further, the SIT server 107 assembles the instruction package 103 and the configuration package 104₃ to generate an application package for deploying on the UAT server 107.

The production server 108 is the last stage for deploying the application. Here, the production server 108 fetches the instruction package 103 from the storage unit 109. Further, the production server 108 compiles the configuration data 102₄ and generates the configuration package 104₄. Then, the production server 108 assembles the instruction package 103 and the configuration package 104₄ to generate an application package for deploying on the production server 108.

In an alternate embodiment, a user may provide the instruction package 103 to the SIT server 106, UAT server 107, and the production server 108. Here, instead of fetching the instruction package 103 from the storage unit 109, the SIT server 106, UAT server 107, and the production server 108 may receive the instruction package 103 from the user.

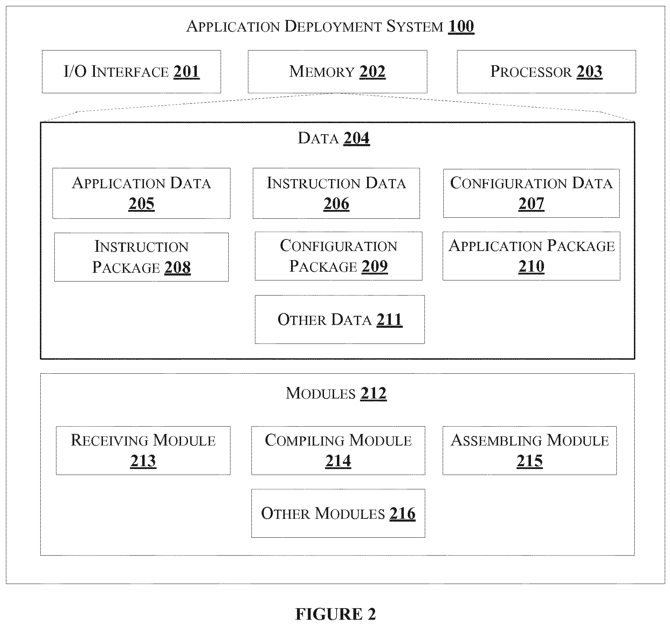

**Figure 2** illustrates internal architecture of the application deployment system 100 in accordance with some embodiments of the present disclosure. The application deployment system 100 may include at least one Central Processing Unit ("CPU" or "processor") 203 and a memory 202 storing instructions executable by the at least one processor 203. The processor 203 may comprise at least one data processor for executing program components for executing user or system-generated requests. The memory 202 is communicatively coupled to the processor 203. The application deployment system 100 further comprises an Input/Output (I/O) interface 201. The I/O interface 201 is coupled with the processor 203 through which an input signal or/and an output signal is communicated.

In an embodiment, the internal architecture of **Figure 2** represents architecture of the development server 105, the SIT server 106, the UAT server 107, and the production server 108. In some embodiments, the processor 203 of each server may be collectively referred as one or more processors 203. Likewise, every component of **Figure 2** may be collectively referred accordingly. Also, reference may be made to individual server in view of the **Figure 2****.**

In an embodiment, data 204 may be stored within the memory 202. The data 204 may include, for example, application data 205, instruction data 206, configuration data 207, an instruction package 208, a configuration package 209, an application package 210, and other data 211.

In an embodiment, the application data 205 may include, but are not limited to, instruction data 206 and configuration data 207.

In an embodiment, the instruction data 206 include, but are not limited to, a set of instructions. The set of instructions relates to function of the application.

In an embodiment, the configuration data 207 may include, but are not limited to, application configuration and environment configuration. The application configuration may include, but are not limited to, a user interface of the application, the language of the application, and timeout parameters. The environment configuration may include but is not limited to a date format, a file path, a hardware interface, temporary files, and cache size.

In an embodiment, the instruction package 208 may include but is not limited to, metadata, symbols, and binary data of the instruction data 206. In an embodiment, the configuration package 209 may include, but is not limited to, metadata, symbols, and binary data of the configuration data 207.

In an embodiment, the application package 210 includes but is not limited to, an instruction package 208, a configuration package 209, and headers.

In an embodiment, the data 204 in the memory 202 is processed by modules 212 of the application deployment system 100. As used herein, the term module refers to an application specific integrated circuit (ASIC), an electronic circuit, a field-programmable gate arrays (FPGA), Programmable System-on-Chip (PSoC), a combinational logic circuit, and/or other suitable components that provide the described functionality. The modules 212 when configured with the functionality defined in the present disclosure will result in a novel hardware.

In one implementation, the modules 212 may include, for example, a receiving module 213, a compiling module 214, an assembling module 215, and other modules 216. It will be appreciated that such aforementioned modules 212 may be represented as a single module or a combination of different modules.

In one implementation, the receiving module 213 receives the application for deploying in each stage of the application life cycle. The application may be received from the user. Alternatively, the receiving module 213 may receive the application from an electronic device associated with the application deployment system 100.

In an embodiment, the electronic device may include, but is not limited to, a Personal Digital Assistant (PDA), a laptop, a Personal Computer (PC), a smartphone or any other computing unit.

In an embodiment, the compiling module 214 may compile the instruction data 101 and the configuration data 102 of respective stages. Particularly, the compiling module 214 of the development server 105 compiles the instruction data 101 and the configuration data 102₁. Whereas the compiling modules 214 of the SIT server 106, the UAT server 107, and the production server 108 compile only the configuration data 102₂, 102₃ and 102₄ respectively. The compiling module 214 compiles the instruction data 101 to generate the instruction package 103 and the configuration data 102₁, the configuration data 102₂, the configuration data 102₃, and the configuration data 102₄ to generate the configuration package 104₁, the configuration package 104₂, the configuration package 104₃, and the configuration package 104₄ respectively. The instruction package 103 comprises binary data of the instruction data 101, and the configuration package 104 of a respective stage comprises binary data of the configuration data 102 of the respective stage.

In an embodiment, the assembling module 215 assembles the instruction package 103 and the configuration package 104 to generate an application package. Particularly, the assembling module 215 of the development server 105 assembles the instruction package 103 and the configuration package 104₁ to generate an application package for deploying on the development server 105. Likewise, the assembling module 215 of the SIT server 106 assembles the instruction package 103 and the configuration package 104₂ to generate an application for deploying on the SIT server 105. The assembling module 215 of the UAT server 107 assembles the instruction package 103 and the configuration package 104₃ to generate an application package for deploying on the UAT server 107. Lastly, the assembling module 215 of the production server 108 assembles the instruction package 103 and the configuration package 104₄ to generate an application package for deploying on the production server 108.

In an embodiment, the other modules 216 may include but are not limited to an incremental build module, a communication module and a deployment module. The incremental build module may be used to compile only changes in the instruction data 101. In an embodiment, the communication module may be used to communicate with the storage unit 109 to store the instruction package 103 or retrieve the instruction package 103 from the storage unit 109. In an embodiment, the deployment module may be used to deploy the application package in respective servers corresponding to the stage of the application deployment.

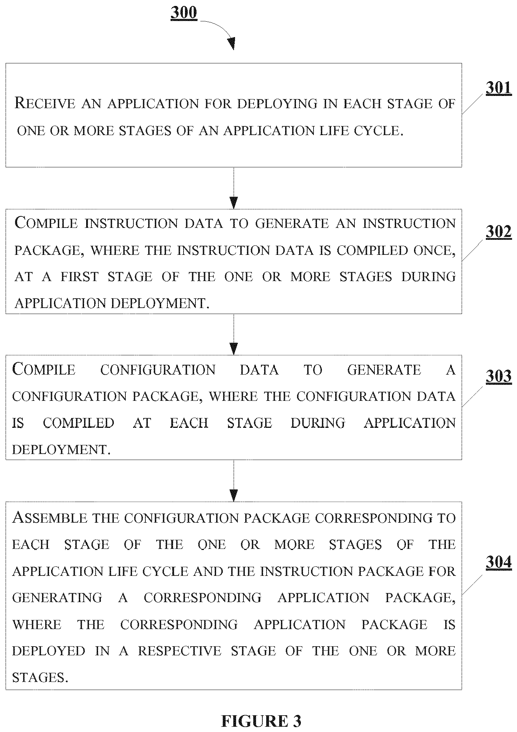

**Figure 3** shows a flow chart illustrating a method for deploying an application package in each stage of the application lifecycle, in accordance with some embodiments of the present disclosure.

As illustrated in **Figure 3****,** the method 300 may comprise one or more steps for deploying an application package in each stage of the application lifecycle, in accordance with some embodiments of the present disclosure. The method 300 may be described in the general context of computer executable instructions. Generally, computer executable instructions can include routines, programs, objects, components, data structures, procedures, modules, and functions, which perform particular functions or implement particular abstract data types.

The order in which the method 300 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At step 301, the receiving module 213 receives the application for deploying in each stage of the application lifecycle. The application may be received from the user or from the electronic device associated with the application deployment system 100.

At step 302, the compiling module 214 compiles the instruction data 101 to generate the instruction package 104. Here, the compiling module 214 compiles the instruction data 101 only once during application deployment in the first stage of the application lifecycle. The instruction package 104 generated in the first stage is used in subsequent stages of the application deployment.

At step 303, the compiling module 214 compiles the configuration data 102 of a respective stage to generate a corresponding configuration package 104. Here, the compiling module 214 compiles the configuration data 102 corresponding to application deployment stage.

At step 304, the assembling module 215 assembles the instruction package 103 and the configuration package 104 corresponding to the application deployment stage to generate a respective application package. The respective application package is deployed in the respective stage of the application lifecycle.

The following description illustrates the method steps of 300 with respect to individual stage:

### Stage 1: Development State

At this stage, the receiving module 213 of the development server 105 receives the application for deploying on the development server 105. The application comprises instruction data 101 and configuration data 102. Since the development stage is the first stage in the application lifecycle, the compiling module 214 compiles the instruction data 101 and the configuration data 102₁ to generate the instruction package 103 and the configuration package 104₁ respectively. Then, the instruction package 103 is stored in the storage unit 109. Further, the assembling module 215 of the development server 105 assembles the instruction package 103 and the configuration package 104₁ to generate an application package for deploying on the development server 105. Furthermore, the application package is deployed on the deployment server 105.

### Stage 2: Standard Integration Test (SIT) stage

At this stage, the receiving module 213 of the SIT server 106 receives the application for deploying on the SIT server 106. In one embodiment, the receiving module 213 may receive the application from the user or from the development server 105. The application comprises the information data 101 and the configuration data 102₂ corresponding to the SIT stage. The receiving module 213 fetches the instruction package 103 from the storage unit 109 instead of compiling the instruction data 101. In an embodiment, the user may provide the instruction package 103 to the SIT server 106. Further, the compiling module 214 of the SIT server 106 compiles the configuration data 102₂ of the application to generate corresponding configuration package 104₂. Furthermore, the assembling module 215 assembles the instruction package 103 and the configuration package 104₂ to generate a corresponding application package. The application package is then deployed on the SIT server 106.

### Stage 3: User Acceptance Test (UAT) stage

At this stage, the receiving module 213 of the UAT server 107 receives the application for deploying on the UAT server 107. In one embodiment, the receiving module 213 may receive the application from the user or from the SIT server 106. The application comprises the instruction data 101 and the configuration data 102₃ corresponding to the UAT stage. Then, the receiving module 213 fetches the instruction package 103 from the storage unit 109 instead of compiling the instruction data 101. In an embodiment, the user may provide the instruction package 103 to the UAT server 107. Further, the compiling module 214 of the UAT server 107 compiles the configuration data 102₃ to generate a corresponding configuration package 104₃. Furthermore, the assembling module 215 assembles the instruction package 103 and the configuration package 104₃ to generate a corresponding application package. The application package is then deployed on the UAT server 107.

### Stage 4: Production stage

At this stage, the receiving module 213 of the production server 108 receives the application for deploying on the production server 108. In one embodiment, the receiving module 213 may receive the application from the user or from the UAT server 107. Here, the application comprises the instruction data 101 and the configuration data 102₄ corresponding to the production stage. Then the receiving module 213 fetches the instruction package 103 from the storage unit 109 instead of compiling the instruction data 101. In an embodiment, the user may provide the instruction package 103 to the production server 108. Further, the compiling module 214 of the production server 108 compiles the configuration data 102₄ to generate a corresponding configuration package 104₄. Furthermore, the assembling module 215 assembles the instruction package 103 and the configuration package 104₄ to generate a corresponding application package. The application package is then deployed on the production server 108.

In one embodiment, the application deployment system 100 identifies changes in the instruction data 101 at one or more stages of the application lifecycle. When a change is detected in the instruction data 101, the application deployment system 100 compiles only the changes in the instruction data 103 to generate an updated instruction package (not shown in figure). Further, the application deployment system 100 stores the updated instruction package in the storage unit 109. In subsequent stage, the application deployment system 100 uses the updated instruction package along with a corresponding configuration package 104 to generate an application package for deploying in the subsequent stage.

### COMPUTER SYSTEM

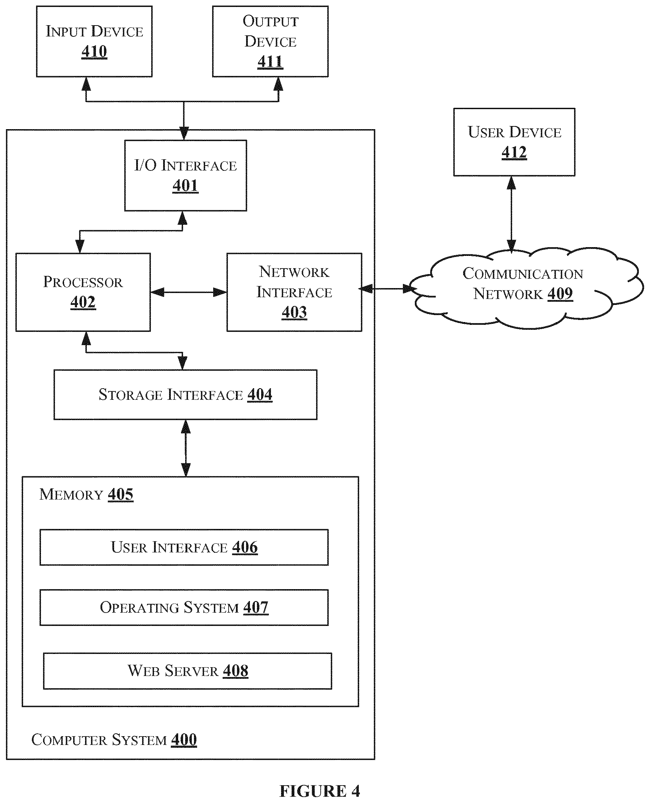

**Figure 4** illustrates a block diagram of an exemplary computer system 400 for implementing embodiments consistent with the present disclosure. In an embodiment, the computer system 400 is used to implement the method for deploying an application package in each stage of an application lifecycle. The computer system 400 may comprise a central processing unit ("CPU" or "processor") 402. The processor 402 may comprise at least one data processor for executing program components for dynamic resource allocation at run time. The processor 402 may include specialized processing units such as integrated system (bus) controllers, memory management control units, floating point units, graphics processing units, digital signal processing units, etc.

The processor 402 may be disposed in communication with one or more input/output (I/O) devices (not shown) via I/O interface 401. The I/O interface 401 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 401, the computer system 400 may communicate with one or more I/O devices. For example, the input device 410 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device 411 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the computer system 400 is connected to the service operator through a communication network 409. The processor 402 may be disposed in communication with the communication network 409 via a network interface 403. The network interface 403 may communicate with the communication network 409. The network interface 403 may employ connection protocols including, without limitation, direct connect, Ethernet (e.g., twisted pair 10/100/1000 Base T), transmission control protocol/Internet protocol (TCP/IP), token ring, IEEE 802.11a/b/g/n/x, etc. The communication network 409 may include, without limitation, a direct interconnection, e-commerce network, a peer to peer (P2P) network, local area network (LAN), wide area network (WAN), wireless network (e.g., using Wireless Application Protocol), the Internet, Wi-Fi, etc. Using the network interface 403 and the communication network 409, the computer system 400 may communicate with the one or more service operators.

In some embodiments, the processor 402 may be disposed in communication with a memory 405 (e.g., RAM, ROM, etc. not shown in Figure 4) via a storage interface 404. The storage interface 404 may connect to memory 405 including, without limitation, memory drives, removable disc drives, etc., employing connection protocols such as serial advanced technology attachment (SATA), Integrated Drive Electronics (IDE), IEEE-1394, Universal Serial Bus (USB), fibre channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 405 may store a collection of program or database components, including, without limitation, user interface 406, an operating system 407, web server 408 etc. In some embodiments, computer system 400 may store user/application data 406, such as the data, variables, records, etc. as described in this disclosure. Such databases may be implemented as fault-tolerant, relational, scalable, secure databases such as Oracle or Sybase.

The operating system 407 may facilitate resource management and operation of the computer system 400. Examples of operating systems include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, 10 etc.), Apple iOS, Google Android, Blackberry OS, or the like.

In some embodiments, the computer system 400 may implement a web browser 408 stored program component. The web browser 408 may be a hypertext viewing application, such as Microsoft Internet Explorer, Google Chrome, Mozilla Firefox, Apple Safari, etc. Secure web browsing may be provided using Secure Hypertext Transport Protocol (HTTPS), Secure Sockets Layer (SSL), Transport Layer Security (TLS), etc. Web browsers 408 may utilize facilities such as AJAX, DHTML, Adobe Flash, JavaScript, Java, Application Programming Interfaces (APIs), etc. In some embodiments, the computer system 400 may implement a mail server stored program component. The mail server may be an Internet mail server such as Microsoft Exchange, or the like. The mail server may utilize facilities such as ASP, ActiveX, ANSI C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the computer system 400 may implement a mail client stored program component. The mail client may be a mail viewing application, such as Apple Mail, Microsoft Entourage, Microsoft Outlook, Mozilla Thunderbird, etc.

In an embodiment, the user device 412 is connected to the communication network 409. The user device 412 may download the application from the production server 409 of the application deployment system 100.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of Figure 3 show certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

In an embodiment, the system provides easy process for error analysis as instruction data is compiled only once during deployment of the application in each stage of the application lifecycle.

In an embodiment, the system disclosed in the present disclosure helps in saving time and resources required for repeated compilation of the instruction data during application deployment in each stage of the application lifecycle.

In an embodiment, the proposed system and method provides flexibility in handling configuration data as the instruction data is isolated from the configuration data while deploying the application.

Finally, the language used in the specification has been principally selected for readability and instructional purposes. It is therefore intended that the scope of the invention is to be limited only by the claims. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method of deploying an application package, in each stage of an application life cycle, comprising:
receiving, by an application deployment system, an application, for deploying in each stage of an application life cycle;
compiling, by the application deployment system, instruction data of the application to generate an instruction package, wherein the instruction data is compiled once, at a first stage of the application life cycle during application deployment;
compiling, by the application deployment system, configuration data of the application, to generate a configuration package, wherein the configuration data is compiled at each stage of the application life cycle during application deployment; and
assembling, by the application deployment system, the configuration package corresponding to each stage of the application life cycle and the instruction package for generating a corresponding application package, wherein the corresponding application package is deployed in a respective stage of the application life cycle.

2. The method of claim 1, wherein the stages of the application life cycle comprise a development stage, a System Integration Test (SIT) stage, a User Acceptance Test (UAT) stage, and a deployment stage.

3. The method of claim 1 or 2, wherein the configuration data comprises application configuration and environment configuration.

4. The method of claim 1, 2, or 3, wherein the deployment of the application package is performed in a server corresponding to each stage of the application life cycle.

5. The method of any preceding claim, wherein compiling, the instruction data further comprises identifying changes in the instruction data subsequent to application package deployment.

6. The method of claim 5, further comprising compiling the changes in the instruction data during deployment of the application package at a subsequent stage wherein the application package comprises previously compiled instruction data and the compiled changes.

7. An application deployment system for deploying an application package, in each stage of an application life cycle, comprising:
one or more processors; and
a memory, communicatively coupled with the one or more processors, for storing processor executable instructions, which, on execution, causes the one or more processors to perform the method of any preceding claim.

8. A non-transitory computer readable medium including instructions stored thereon that when processed by at least one processor cause a device to perform operations comprising the method of any of claims 1 - 6.
